# EUROPÄISCHE PATENTSCHRIFT

(11) **EP 1 303 993 B1**
(45) Veröffentlichungstag und Bekanntmachung des Hinweises auf die Patenterteilung: **28.11.2007**
(21) Anmeldenummer: 01953854.5
(22) Anmeldetag: 04.07.2001
(51) Int. Cl.: H04Q 3/00

(54) **VERFAHREN ZUR NUTZKANALUNABHÄNGIGEN ÜBERTRAGUNG VON INFORMATIONSSIGNALEN IN EINEM VERMITTLUNGSNETZSYSTEM**
METHOD FOR TRANSMITTING INFORMATION SIGNALS IN A TRANSMISSION NETWORK INDEPENDENT OF THE USER CHANNEL
PROCEDE POUR TRANSMETTRE INDEPENDAMMENT DE CANAUX UTILES DES SIGNAUX D'INFORMATIONS DANS UN SYSTEME DE RESEAUX DE COMMUNICATION

(30) Priorität: 27.07.2000 DE 10036687
(43) Veröffentlichungstag der Anmeldung: 23.04.2003
(73) Patentinhaber: NOKIA SIEMENS NETWORKS GMBH & CO. KG, 81541 München (DE)
(72) Erfinder: PAULMANN, Dirk, 81543 München (DE); GNEITING, Dieter, 81375 München (DE); KRAFT, Stefan, 81479 München (DE); ECKINGER, Mathilde, 81379 München (DE); HINDERBERGER, Harald, 81241 München (DE)
(86) Internationale Anmeldenummer: PCT/DE2001/002473
(87) Internationale Veröffentlichungsnummer: WO 2002/011457

(56) Entgegenhaltungen:
- WO-A-00/11883
- US-A- 5 440 626
- GOLDBERG R R ET AL: "COMMON CHANNEL SIGNALING INTERFACE FOR LOCAL EXCHANGE CARRIER TO INTEREXCHANGE CARRIER INTERCONNECTION" IEEE COMMUNICATIONS MAGAZINE, Bd. 28, Nr. 7, Juli 1990 (1990-07), Seiten 64-71, XP000140259 ISSN: 0163-6804
- BIMPSON A D ET AL: "CUSTOMER SIGNALLING IN ISDN" BRITISCH TELECOMMUNICATIONS ENGINEERING, Bd. 5, Nr. 7, April 1986 (1986-04), XP000899447

## Beschreibung

Die Erfindung bezieht sich auf ein Verfahren zur nutzkanalunabhängigen Übertragung von Informationssignalen, insbesondere von Steuersignalen, Befehlssignalen, Abfragesignalen und/oder Antwortsignalen, zwischen einer an einem Vermittlungsnetz mit zumindest einer Vermittlungsstelle angeschlossenen Signalabgabe-/-aufnahmeeinrichtung und einer an einem weiteren Vermittlungsnetz mit zumindest einer Vermittlungsstelle angeschlossenen Signalaufnahme-/-abgabeeinrichtung in einem wenigstens diese beiden Vermittlungsnetze umfassenden Vermittlungsnetzsystem, in dessen Vermittlungsnetzen jeweils neben Nutzkanälen für die Übertragung von Sprach-, Bild- und/oder Datensignalen gesonderte Signalisierungskanäle verfügbar sind, über die in bestimmter Zuordnung zu den betreffenden Nutzkanälen Signalisierungsinformationen im Zuge von Nutzkanalverbindungen oder auch ohne Bezug zu Nutzkanälen übertragbar sind,
wobei zumindest die beiden genannten Vermittlungsnetze des Vermittlungsnetzsystems mittels Übergangseinrichtungen über eine Netzverbindungseinrichtung miteinander gekoppelt sind, die ebenfalls über Nutzkanäle und über diesen zugeordnete Signalisierungskanäle verfügt,
und wobei in den Vermittlungsnetzen und in der diese miteinander verbindenden Netzverbindungseinrichtung unterschiedliche Signalisierungssysteme betrieben werden.

Die nutzkanalunabhängige Übertragung von Informationssignalen gewinnt zunehmende Bedeutung neben nutzkanalbezogenen Verbindungen in einem Vermittlungsnetzsystem der vorstehend genannten Art, um beispielsweise Steuerinformationen mit geringer Datenrate zwischen zwei verschiedenen Vermittlungsnetzen des betreffenden Vermittlungsnetzsystems zugehörigen Endpunkten auszutauschen. Solche Steuerinformationen können beispielsweise Telematik-Steuerinformationen oder Statusabfragen sein. Überdies können derartige Steuerinformationen und die diese enthaltenden Informationssignale für den Aufbau einer Verbindung zwischen zwei Teilnehmerstellen von Bedeutung sein, die an verschiedenen Vermittlungsnetzen des Vermittlungsnetzsystems angeschlossen sind und von denen die anzurufende Teilnehmerstelle sich zunächst im Besetztzustand befindet. Nach vergeblichem Verbindungsaufbau zwischen den betreffenden Teilnehmerstellen unter zunächst erfolgender Belegung entsprechender Nutzkanäle in den einzelnen Vermittlungsnetzen und in der zwei solcher Netze miteinander verbindenden Netzverbindungseinrichtung und anschließender sofortiger Freigabe dieser Nutzkanäle können mit Hilfe der genannten Steuerinformationen dann eine Statusänderung bei den betreffenden Teilnehmerstellen der jeweils anderen Teilnehmerstelle mitgeteilt werden, um daraufhin schließlich die Herstellung der gewünschten Verbindung zwischen der rufenden Teilnehmerstelle und der anzurufenden Teilnehmerstelle automatisch zu veranlassen, nachdem diese von ihrem zuvor erwähnten Besetztzustand in den Freizustand gewechselt hat. Für diesen Dienst, der im Englischen mit "Completion of Calls to Busy Subscriber - CCBS" bezeichnet wird, werden keine Nutzkanäle in dem Vermittlungsnetzsystem benötigt, sondern es genügt vielmehr, die entsprechenden Steuerinformationen bzw. Informationssignale über das jeweils verfügbare Signalisierungssystem zu übertragen.

Die Übertragung von Steuerinformationen enthaltenden Informationssignalen im jeweiligen Signalisierungssystem funktioniert in einem Vermittlungsnetzsystem nur dann, wenn das in diesem benutzte Signalisierungssystem eine nutzkanalunabhängige Übertragung solcher Informationssignale zuläßt. Dies ist zwar in Vermittlungsnetzen der Fall, in denen z.B. mit dem Signalisierungssystem Nr. 7 entsprechend der ITU-Telekommunikationsnorm Q.733.3 gearbeitet wird. Bei diesem Signalisierungssystem steht nämlich ein sogenannter zentraler Zeichenkanal für die Übertragung von Signalisierungsinformationen zur Verfügung, über den aber nicht nur Signalisierungsinformationen, sondern auch andere Informationssignale übertragen werden können, ohne dass zugleich auch Nutzkanäle in dem betreffenden Fernmeldenetz belegt werden müssen. Das Vorhandensein eines derartigen Signalisierungssystems im gesamten Vermittlungsnetzsystem kann indessen nicht immer vorausgesetzt werden.

So ist es beispielsweise möglich, dass einzelne Vermittlungsstellen des Vermittlungsnetzsystems oder Netzverbindungseinrichtungen zwischen Vermittlungsstellen des betreffenden Vermittlungsnetzsystems mit einem Signalisierungssystem betrieben werden, welches unterschiedlich ist von dem gerade erwähnten Signalisierungssystem. Als Beispiel sei hier das Signalisierungssystem DSS1 (aus dem Englischen Digital Subscriber Signalling System No. 1) genannt, das zum Anschluß von ISDN-Anlagen und Übertragungseinrichtungen verwendet ist (siehe hierzu den ETSI-Standard EN 300 196-1). Entsprechend diesem Signalisierungssystem wird ein Zeitkanal aus einer Reihe von Zeitkanälen mit zyklisch wiederholt in aufeinanderfolgenden Pulsrahmen liegenden Zeitfächern für die Übertragung von Signalisierungsinformationen herangezogen. Dabei existiert jedoch bisher kein ausreichendes Verfahren, diesen Signalisierungskanal nutzkanalunabhängig für die Übertragung von Informationssignalen zu verwenden, um eine nutzkanalunabhängige End-to-End-Beziehung über Netzgrenzen hinweg aufzubauen.

Der Erfindung liegt daher die Aufgabe zugrunde, einen Weg zu zeigen, wie bei einem Verfahren der eingangs genannten Art vorgegangen werden kann, um eine nutzkanalunabhängige Übertragung von Informationssignalen in einem Vermittlungsnetzsystem zu ermöglichen, in welchem unterschiedliche Signalisierungssysteme betrieben werden, von denen zumindest ein Signalisierungssystem an sich keine ausreichende Möglichkeit zu einer solchen nutzkanalunabhängigen Informationssignalübertragung über Netzgrenzen hinweg bietet.

Gelöst wird die vorstehend aufgezeigte Aufgabe bei einem Verfahren der eingangs genannten Art erfindungsgemäß dadurch, dass die Informationssignale in den beiden Vermittlungsnetzen und über die Netzverbindungseinrichtung jeweils im Zuge von gesonderten virtuellen Verbindungen innerhalb des jeweiligen Signalisierungssystems übertragen werden
und dass diese virtuellen Verbindungen innerhalb der betreffenden Vermittlungsnetze bzw. über die Netzverbindungseinrichtung durch die in den betreffenden Vermittlungsnetzen dabei jeweils zu benutzenden bzw. benutzten Vermittlungsstellen bzw. durch die Übergangseinrichtungen zu der Netzverbindungseinrichtung hin bezeichnende Angaben festgelegt werden.

Die Erfindung bringt den Vorteil mit sich, dass auf relativ einfache Weise Informationssignale in einem Vermittlungsnetzsystem nutzkanalunabhängig übertragen werden können, in welchem zumindest ein Signalisierungssystem benutzt ist, welches an sich keine ausreichende Möglichkeit zur nutzkanalunabhängigen Informationssignalübertragung über Netzgrenzen hinweg bietet. Durch die Übertragung der Informationssignale im Zuge von virtuellen Verbindungen innerhalb der jeweils betroffenen Vermittlungsnetze und über die zwei solcher Vermittlungsnetze miteinander verbindende Netzverbindungseinrichtung im jeweiligen Signalisierungssystem kann die gewünschte Informationssignalübertragung stattfinden, ohne dass eine unnötige Belegung von Nutzkanälen innerhalb des Vermittlungsnetzsystems erforderlich ist. Dadurch, dass die Informationssignalübertragung im jeweiligen Signalisierungssystem in Form jeweils einer auch als logische Verbindung zu bezeichnenden virtuellen Verbindung erfolgt, wird das jeweilige Signalisierungssystem nur kurzzeitig, nämlich für die jeweilige Informationssignalübertragung benutzt und nicht ständig belegt. Im übrigen braucht für die jeweilige virtuelle Verbindung nicht irgendein bestimmter Signalisierungskanal benutzt zu werden, sondern es kann irgendein gerade verfügbarer Signalisierungskanal innerhalb des jeweiligen Signalisierungssystems genutzt werden, da dieser ja lediglich für die kurze Dauer der Informationssignalübertragung im Zuge der betreffenden virtuellen Verbindung gebraucht wird. Überdies ist von Vorteil, dass in jedem der in eine solche nutzkanalunabhängige Informationssignalübertragung einbezogenen, über eine Netzverbindungseinrichtung miteinander verbundenen Vermittlungsnetze keine Kenntnis über die Topologie des jeweils anderen Vermittlungsnetzes gebraucht wird.

Eine zweckmäßige Ausgestaltung des Verfahrens gemäß der Erfindung besteht darin,
a) dass in dem einen Vermittlungsnetz, an dem die Signalabgabe-/-aufnahmeeinrichtung angeschlossen ist, in dem diesem Vermittlungsnetz zugehörigen Signalisierungssystem im Zuge einer zu einer ersten virtuellen Verbindung gehörenden ersten logischen Teilverbindung von der Signalabgabe-/-aufnahmeeinrichtung zu der Netzverbindungseinrichtung hin ein erstes Informationssignal zusammen mit der das betreffende weitere Vermittlungsnetz und die an diesem angeschlossene Signalaufnahme-/-abgabeeinrichtung bezeichnenden Wahlinformation unter Festhalten von den dabei benutzten Vermittlungs- bzw. Übertragungsweg bezeichnenden Adressenangaben übertragen wird,
b) dass im Zuge einer zu einer zweiten virtuellen Verbindung gehörenden ersten logischen Teilverbindung über die Netzverbindungseinrichtung zu dem genannten weiteren Vermittlungsnetz hin das betreffende erste Informationssignal zusammen mit einer den Übertragungsweg über die betreffende Netzverbindungseinrichtung bzw. die betreffende zweite virtuelle Verbindung festlegenden Kennzeichnungsinformation übertragen wird,
c) und dass in dem genannten weiteren Vermittlungsnetz, an dem die Signalaufnahme-/-abgabeeinrichtung angeschlossen ist, nach Aufnahme der diese bezeichnenden Wahlinformation über die genannte Netzverbindungseinrichtung im Zuge einer zu einer dritten virtuellen Verbindung gehörenden ersten logischen Teilverbindung von der genannten Netzverbindungseinrichtung zu der Signalaufnahme-/-abgabeeinrichtung hin das betreffende erste Informationssignal zusammen mit der die Signalaufnahme-/-abgabeeinrichtung bezeichnenden Wahlinformation unter Festhalten von den dabei benutzten Vermittlungs- bzw. Übertragungsweg bezeichnenden Adressenangaben übertragen wird.
   Durch die vorstehend aufgeführten Maßnahmen ergibt sich der Vorteil einer besonders einfachen Verfahrensweise zur nutzkanalunabhängigen Übertragung eines ersten Informationssignals in der einen Übertragungsrichtung von dem genannten einen Vermittlungsnetz zu dem genannten weiteren Vermittlungsnetz.
   Vorzugsweise wird bei der vorstehend betrachteten Verfahrensweise ergänzend so vorgegangen,
d) dass im Zuge einer zu der dritten virtuellen Verbindung gehörenden und diese vervollständigenden zweiten logischen Teilverbindung von der betreffenden Signalaufnahme-/-abgabeeinrichtung zu der Netzverbindungseinrichtung hin ein zweites Informationssignal an Hand der den Übertragungsweg in dem betreffenden weiteren Vermittlungsnetz festlegenden Adressenangabe übertragen wird,
e) dass im Zuge einer zu der zweiten virtuellen Verbindung gehörenden und diese vervollständigenden zweiten logischen Teilverbindung über die Netzverbindungseinrichtung das zweite Informationssignal zusammen mit der genannten Kennzeichnungsinformation übertragen wird
f) und dass im Zuge einer zu der ersten virtuellen Verbindung gehörenden und diese vervollständigenden zweiten logischen Teilverbindung in dem genannten einen Vermittlungsnetz das zweite Informationssignal zu der Signalabgabe-/-aufnahmeeinrichtung hin an Hand der den Übertragungsweg in dem betreffenden einen Vermittlungsnetz festlegenden Adressenangabe übertragen wird.

Diese gerade betrachteten Verfahrensmaßnahmen bringen den Vorteil mit sich, dass auf besonders einfache Weise eine nutzkanalunabhängige Übertragung eines zweiten Informationssignals in der zu der zuvor betrachteten Übertragungsrichtung entgegengerichteten Übertragungsrichtung erfolgen kann, das heißt von dem genannten weiteren Vermittlungsnetz zu dem genannten einen Vermittlungsnetz hin bzw. zwischen den diesen Vermittlungsnetzen zugehörigen Einrichtungen bzw. Teilnehmerstellen. Von Vorteil ist ferner, dass anschließend weitere Informationssignale zwischen der Signalabgabe-/-aufnahmeeinrichtung und der Signalaufnahme-/-abgabeeinrichtung über die festliegenden virtuellen Verbindungen bzw. Verbindungswege auf einfache Weise übertragen werden können.

Um den eingangs erwähnten Dienst des Verbindungsaufbaus zwischen zwei an unterschiedlichen Vermittlungsnetzen eines Vermittlungsnetzsystems der oben angegebenen Art angeschlossenen Teilnehmerstellen zu bewirken, von denen die zunächst im Besetztzustand befindliche anzurufende Teilnehmerstelle in den Freizustand wechselt, (Completion of Calls to Busy Subscriber - CCBS) zu realisieren, wird bei den beiden vorstehend betrachteten zweckmäßigen Ausgestaltungen des Verfahrens gemäß der Erfindung zur Informationssignalübertragung in der einen Übertragungsrichtung und in der anderen Übertragungsrichtung vorzugsweise so vorgegangen, dass nach zunächst fehlgeschlagenem Verbindungsaufbau zwischen den betreffenden Teilnehmerstellen unter Heranziehung und anschließender Freigabe von Nutzkanälen als erstes und zweites Informationssignal Steuersignale (Anforderungs- und Quittungssignale) übertragen werden, durch welche ein Verbindungsaufbau zwischen der an dem genannten einen Vermittlungsnetz angeschlossenen, die Signalabgabe-/-aufnahmeeinrichtung darstellenden rufenden Teilnehmerstelle und der an dem genannten weiteren Ver-mittlungsnetz angeschlossenen, die Signalaufnahme-/-abgabe-einrichtung darstellenden anzurufenden Teilnehmerstelle ermöglicht wird, nachdem die zunächst im Besetztzustand befindliche anzurufende Teilnehmerstelle der betreffenden Teilnehmerstellen in den Freizustand gewechselt hat. Um einen solchen Verbindungsaufbau automatisch zu bewirken, sind dann weitere Informationssignale im Zuge der festgelegten virtuellen Verbindungen zu übertragen. Damit ergibt sich hier der Vorteil, dass der betreffende Dienst CCBS auf besonders einfache Weise zwischen unterschiedlichen Vermittlungsnetzen zugehörigen Teilnehmerstellen verfügbar ist, zwischen denen er bisher nicht möglich war, da zwischen diesen keine sogenannte End-to-End-Beziehung aufgebaut werden kann.

Von weiterem Vorteil ist es, dass bei der Informationssignalübertragung in der genannten einen Übertragungsrichtung über die Netzverbindungseinrichtung nur derjenige Teil der Wahlinformation übertragen wird, der zur Bezeichnung der Signalaufnahme-/-abgabeeinrichtung in dem weiteren Vermittlungsnetz erforderlich ist. Dadurch wird die Wahlinformation von demjenigen Wahlinformationsteil entlastet, der in dem genannten weiteren Vermittlungsnetz nicht mehr erforderlich ist, welches ja bereits durch die betreffende Wahlinformation identifiziert ist.

Zweckmäßigerweise wird in dem Vermittlungsnetzsystem ferner so vorgegangen, dass als die die virtuellen Verbindungen innerhalb der Vermittlungsnetze jeweils festlegenden Angaben bzw. Adressenangaben in den das jeweils übertragene Informationssignal aufnehmenden Vermittlungsstellen jeweils eine Angabe über die das jeweilige Informationssignal abgebende Einrichtung bzw. Vermittlungsstelle innerhalb des betreffenden Vermittlungsnetzes gespeichert wird, dass zusätzlich in diesen Vermittlungsstellen jeweils eine im jeweiligen Vermittlungsnetz jeweils eine verbindungsindividuell festgelegte bzw. benutzte Referenznummer bzw. -angabe gespeichert wird und dass allein die betreffenden Angaben bzw. Adressen- und Referenzangaben im Zuge der Übertragung weiterer Informationssignale durch die genannten virtuellen Verbindungen genutzt werden. Dies bringt den Vorteil mit sich, dass die Vermittlungs- bzw. Übertragungswege in den einzelnen Vermittlungsnetzen des Vermittlungsnetzsystems für die jeweilige Informationssignal-übertragung zwischen den darin involvierten Einrichtungen bzw. Teilnehmerstellen eindeutig definiert sind, so dass auch gleichzeitig eine Mehrzahl entsprechender Informationssignalübertragungen zwischen gleichen Vermittlungsnetzen des Vermittlungsnetzsystems ausgeführt werden kann.

Als eine alternative Vorgehensweise zu der zuletzt betrachteten Verfahrensweise kann gemäß weiterer Ausgestaltung der Erfindung auch so vorgegangen werden, dass die im Zuge der jeweiligen virtuellen Verbindung in dem einen Vermittlungsnetz und/oder in dem weiteren Vermittlungsnetz benutzten, den jeweiligen Vermittlungs- bzw. Übertragungsweg festlegenden Angaben bzw. Adressenangaben sowie die verbindungsindividuell im jeweiligen Vermittlungsnetz festgelegten bzw. benutzten Referenznummern bzw. -angaben anstatt in den jeweiligen Vermittlungsstellen der betreffenden Vermittlungsnetze abgespeichert zu werden zusammen mit dem jeweiligen Informationssignal zwischen der Informationsabgabe-/-aufnahmeeinrichtung und der Signalaufnahme-/-abgabeeinrichtung oder zwischen den diese Einrichtungen enthaltenden Vermittlungsstellen übertragen und lediglich dort festgehalten werden. Dies bringt den Vorteil mit sich, dass weitgehend ohne einen besonderen Speicheraufwand in den einzelnen Vermittlungsstellen der jeweils betroffenen Vermittlungsnetze ausgekommen werden kann.

Anhand von Zeichnungen wird die Erfindung nachstehend an einem Ausführungsbeispiel näher erläutert.
- Fig. 1: zeigt schematisch ein Vermittlungsnetzsystem mit zwei Vermittlungsnetzen, die über eine Netzverbindungseinrichtung verbunden sind und denen Teilnehmerstellen zugehörig sind, zwischen denen Informationssignale nutzkanalunabhängig übertragbar sind.
- Fig. 2: zeigt in einer schematischen Darstellung Transportblöcke, die zwischen verschiedenen Stellen in dem in Fig. 1 dargestellten Vermittlungsnetzsystem übertragbar sind.

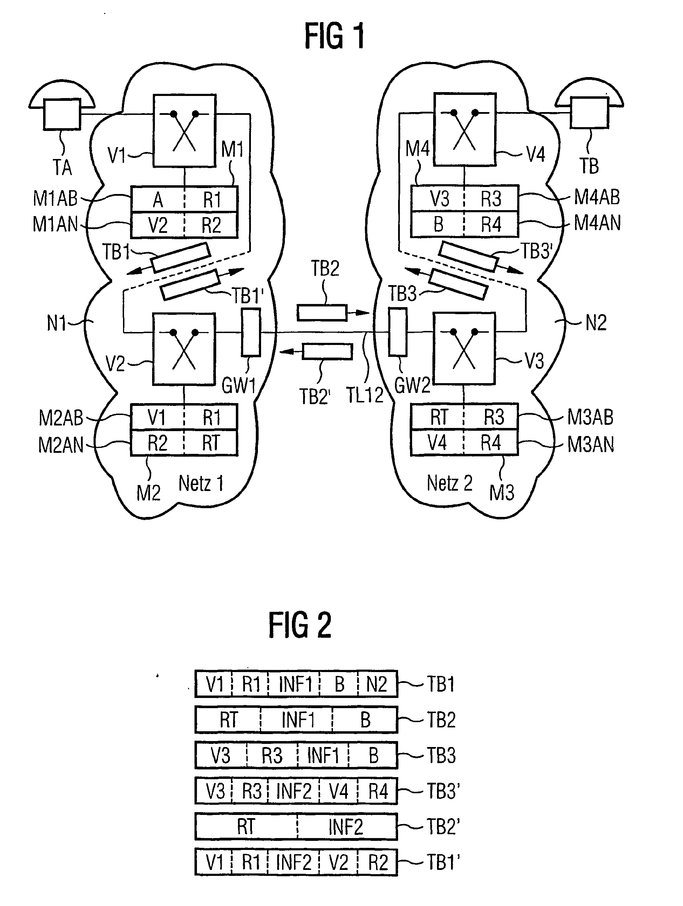

In Fig. 1 ist schematisch ein Vermittlungsnetzsystem dargestellt, zu dem ein als Netz 1 bezeichnetes Vermittlungsnetz N1 und ein weiteres als Netz 2 bezeichnetes Vermittlungsnetz N2 gehören. Diese Vermittlungsnetze N1 und N2 sind über eine Netzverbindungseinrichtung TL12 miteinander verbunden, bei der es sich im vorliegenden Fall beispielsweise um eine PCM-Übertragungsleitung handeln kann. An dieser Stelle sei jedoch angemerkt, dass das Vermittlungsnetzsystem zusätzlich zu den dargestellten Vermittlungsnetzen N1 und N2 noch eine Reihe weiterer Vermittlungsnetze umfassen kann, die mit den dargestellten beiden Vermittlungsnetzen N1 bzw. N2 verbunden sein können.

Die Vermittlungsnetze N1 und N2 sind so ausgelegt, dass sie jeweils neben Nutzkanälen für die Übertragung von Sprach-, Bild- und/oder Datensignalen gesonderte Signalisierungskanäle aufweisen, die Signalisierungsinformationen im Zuge von Nutzkanalverbindungen übertragen können. Die betreffenden Signalisierungskanäle sind hier insbesondere für beide Vermittlungsnetze N1 und N2 zentrale Zeichenkanäle, wie dies beispielsweise in Vermittlungssystemen der Fall ist, die unter der Bezeichnung "EWSD" bereits kommerziell im Einsatz und an vielen Stellen beschrieben sind. In diesem Fall wird beispielsweise das Signalisierungssystem Nr. 7 entsprechend der eingangs genannten Norm angewandt.

Die Netzverbindungseinrichtung TL12, die beispielsweise durch eine PCM-Übertragungsleitung gebildet sein kann, verfügt ebenfalls über Nutzkanäle und über diesen zugeordnete Signalisierungskanäle. Dieses Signalisierungssystem unterscheidet sich jedoch im vorliegenden Fall von den Signalisierungssystemen, die in den beiden Vermittlungsnetzen N1 und N2 verfügbar sind. Das in diesem Fall benutzte Signalisierungssystem kann, wie eingangs ausgeführt, beispielsweise das mit DSS1 bezeichnete Signalisierungssystem sein, bei dem die Signalisierungskanäle in jeweils festgelegter Zuordnung zu einer vorher vereinbarten Referenz genutzt werden und an sich lediglich für Signalisierungszwecke vorgesehen sind. An dieser Stelle sei angemerkt, dass die betreffende Netzverbindungseinrichtung TL12 gegebenenfalls auch durch eine gesonderte Vermittlungseinrichtung oder sogar durch ein gesondertes Vermittlungsnetz gebildet sein kann, in welchem Signalisierungskanäle entsprechend einem Signalisierungssystem verfügbar sind, wie dem erwähnten Signalisierungssystem DSS1, welches verschieden ist von dem (den) Signalisierungssystem(en), das (die) in den Vermittlungsnetzen N1 und N2 verfügbar ist (sind).

Jedes der dargestellten Vermittlungsnetze N1 und N2 weist zumindest eine Vermittlungsstelle auf. Im vorliegenden Fall sind in beiden Vermittlungsnetzen N1, N2 zwei jeweils durch eine gestrichelte Linie miteinander verbundene Vermittlungsstellen dargestellt. Zum Vermittlungsnetz N1 gehören die beiden Vermittlungsstellen V1 und V2, und zum Vermittlungsnetz N2 gehören die beiden Vermittlungsstellen V3 und V4. Alle diese Vermittlungsstellen V1 bis V4 sind in Fig. 1 lediglich schematisch angedeutet.

Mit der Vermittlungsstelle V2 des Vermittlungsnetzes N1 ist eine Übergangseinrichtung bzw. ein Gateway GW1 verbunden, die bzw. das mit der einen Seite der Netzverbindungseinrichtung TL12 verbunden ist. In entsprechender Weise ist die Vermittlungsstelle V3 des anderen Vermittlungsnetzes N2 mit einer Übergangseinrichtung bzw. einem Gateway GW2 verbunden, die bzw. das mit der anderen Seite der Netzverbindungseinrichtung TL12 verbunden ist.

Mit den Vermittlungsstellen V1 und V4 der beiden Vermittlungsnetze N1 und N2 sind in Fig. 1 zwei Teilnehmerstellen TA bzw. TB verbunden dargestellt. Es dürfte einzusehen sein, dass eine Vielzahl von Teilnehmerstellen an den einzelnen Vermittlungsstellen angeschlossen sein kann.

Den in Fig. 1 dargestellten Vermittlungsstellen V1, V2, V3 und V4 sind gemäß Fig. 1 individuell Speicher M1, M2, M3 bzw. M4 zugehörig, in denen Angaben über die jeweiligen virtuellen Verbindungen gespeichert werden, die über die betreffenden Vermittlungsstellen V1, V2, V3 bzw. V4 geführt sind. Entsprechend der Vermittlungs- bzw. Übertragungsrichtung innerhalb der jeweiligen Verbindung weist jeder der Speicher M1 bis M4 hier zwei gesonderte Speicherabschnitte auf, in denen jeweils entsprechende Angaben gespeichert sind. So weist der Speicher M1 die Speicherabschnitte M1AB für von der Vermittlungsstelle V1 aus betrachtet abgehende Verbindungen und einen Speicherabschnitt M1AN für bezogen auf die Vermittlungsstelle V1 ankommende Verbindungen auf. In entsprechender Weise weist der Speicher M2 zwei Speicher-abschnitte M2AB, M2AN auf, und die Speicher M3 und M4 weisen in entsprechender Weise Speicherabschnitte M3AB und M3AN bzw. M4AB und M4AN auf. Auf die in diesen Speicherabschnitten in Fig. 1 eingetragenen Angaben wird weiter unten im Zusammenhang mit Fig. 2 näher eingegangen.

Zusätzlich zu den vorstehend erläuterten, in Fig. 1 dargestellten Einrichtungen sind an den Verbindungsstrecken zwischen den Vermittlungsstellen V1 und V2 einerseits und zwischen den Vermittlungsstellen V3 und V4 andererseits sowie an der Netzverbindungseinrichtung TL12 sogenannte Transportblöcke TB1, TB1', TB3, TB3' bzw. TB2 und TB2' dargestellt. Mit bzw. in diesen Transportblöcken TB1 bis TB3' werden zwischen den aus Fig. 1 ersichtlichen Stellen bzw. Einrichtungen verschiedenartige Signale übertragen, wie dies an Hand der Fig. 2 noch näher erläutert werden wird, in der die Inhalte der einzelnen Transportblöcke TB1 bis TB3' näher veranschaulicht sind.

Nachdem zuvor die in Fig. 1 dargestellten Verhältnisse in dem für das Verständnis der vorliegenden Erfindung ausreichenden Umfang erläutert worden sind, wird nunmehr auf das in dem dargestellten Vermittlungssystem zur Anwendung gelangende Verfahren gemäß der vorliegenden Erfindung zur nutzkanalunabhängigen Übertragung von Informationssignalen näher eingegangen, bei denen es sich um Steuersignale, Befehlssignale, Abfragesignale und/oder Antwortsignale handeln kann. Solche Informationssignale sind zwischen den in Fig. 1 dargestellten Teilnehmerstellen TA und TB bzw. zwischen den Vermittlungsstellen V1, V4 zu übertragen, an denen die betreffenden Vermittlungsstellen TA bzw. TB angeschlossen sind. Die Teilnehmerstelle TA stellt dabei eine Signalabgabe-/-aufnahmeeinrichtung dar, und die Teilnehmer-stelle TB stellt eine Signalaufnahme-/-abgabeeinrichtung dar.

Um die Informationssignale zwischen der Signalabgabe-/-aufnahmeeinrichtung TA und der Signalaufnahme-/-abgabeeinrichtung TB nutzkanalunabhängig zu übertragen, werden diese Informationssignale in den beiden Vermittlungsnetzen N1 und N2 und auch über die Netzverbindungseinrichtung TL12 jeweils im Zuge von gesonderten virtuellen Verbindungen innerhalb des jeweiligen Signalisierungssystems übertragen. Jede virtuelle Verbindung wird durch zwei logische Teilverbindungen gebildet, die in zueinander entgegengesetzten Übertragungsrichtungen verlaufen. Erst wenn beide logischen Teilverbindungen erfolgreich aufgebaut sind, liegt die betreffende virtuelle Verbindung fest. Es spielt im Zuge der Informationssignalübertragung hierbei keine Rolle, dass sich die vorhandenen Signalisierungssysteme voneinander unter-scheiden; sie eignen sich jedenfalls für die Übertragung von Informationssignalen im Zuge von gesonderten virtuellen Verbindungen. Bezüglich dieser virtuellen Verbindungen, auf die nachstehend noch näher eingegangen werden wird, werden die innerhalb der beiden Vermittlungsnetze N1 und N2 bzw. über die Netzverbindungseinrichtung TL12 benutzten Vermittlungs- und Übertragungswege durch Angaben festgelegt, die im vorliegenden Fall in den einzelnen Vermittlungsnetzen N1 und N2 bzw. in den deren Vermittlungsstellen V1 bis V4 zugehörigen Speichern M1 bis M4 gespeichert werden.

Um die Übertragung von Informationssignalen im Zuge solcher virtueller Verbindungen näher zu veranschaulichen, wird nunmehr auf ein besonderes Beispiel einer solchen nutzkanalunabhängigen Übertragung eines ersten Informationssignals INF1 und einer daran sich anschließenden nutzkanalunabhängigen Übertragung eines zweiten Informationssignals INF2 eingegangen.

Die zu beschreibende nutzkanalunabhängige Übertragung des ersten Informationssignals INF1 beginnt damit, dass in dem Vermittlungsnetz N1, an dem die Signalabgabe-/Signalaufnahmeeinrichtung TA angeschlossen ist, in dem diesem Vermittlungsnetz N1 zugehörigen Signalisierungssystem im Zuge einer ersten virtuellen Verbindung, genauer gesagt im Zuge einer zu einer ersten virtuellen Verbindung gehörenden ersten logischen Teilverbindung von der betreffenden Signalabgabe-/-aufnahmeeinrichtung TA zu der Netzverbindungseinrichtung TL12, und zwar zu der mit der einen Seite dieser Netzverbindungseinrichtung TL12 verbundenen Übergangseinrichtung GW1 hin das betreffende erste Informationssignal INF1 zusammen mit einer Wahlinformation B, N2 übertragen wird, die zum einen die Netzzugangskennung für das weitere Vermittlungsnetz N2 und zum anderen die Rufnummer der an diesem Vermittlungsnetz N2 angeschlossenen Signalaufnahme-/-abgabeeinrichtung TB enthält. In diesem Zusammenhang sei noch angemerkt, dass die Struktur der die Signalaufnahme-/-abgabeeinrichtung TB bezeichnenden Wahlinformation bzw. Rufnummer im Vermittlungsnetz N1 völlig anders sein kann als im Vermittlungsnetz N2. Im Zuge der Übertragung der Informationen bzw. Signale INF1, B und N2 von der Vermittlungsstelle V1 zur Vermittlungsstelle V2 innerhalb des Vermittlungsnetzes N1 wird außerdem eine die Vermittlungsstelle V1 bezeichnende Angabe V1 zusammen mit einer der genannten ersten logischen Teilverbindung in der Vermittlungsstelle V1 zugeordneten Referenzangabe R1 übertragen. Dies ist durch den in Fig. 2 dargestellten Transportblock TB1 verdeutlicht.

In dem Speicherabschnitt M1AB des der Vermittlungsstelle V1 zugehörigen Speichers M1 wird dabei für diese Verbindung zunächst die Angabe A gespeichert, welche die Herkunft des betreffenden ersten Informationssignals von der Signalabgabe-/-aufnahmeeinrichtung TA angibt und damit eine Adressenangabe darstellt. In dem Speicherabschnitt M2AB des der Vermittlungsstelle V2 zugehörigen Speichers M2 wird im Zusammenhang mit dem genannten ersten Informationssignal INF1 die Angabe V1 als Adressenangabe gespeichert, die angibt, dass die betreffende virtuelle Verbindung von der Vermittlungsstelle V1 her erfolgt ist. Außerdem wird in den beiden gerade betrachteten Speicherabschnitten M1AB und M2AB die Referenzangabe R1 gespeichert, die der Übertragung des ersten Informationssignals INF1 in der Vermittlungsstelle des Vermittlungsnetzes N1 zugeordnet ist.

Sind übrigens zwischen den Vermittlungsstellen V1 und V2 des Vermittlungsnetzes N1 weitere Vermittlungsstellen vorhanden und in die Übertragung der Informationen bzw. Signale INF1, B und N2 sowie der Referenzangabe R1 einbezogen, so laufen zwischen und in diesen weiteren Vermittlungsstellen entsprechende Vorgänge ab, wie sie vorstehend bezüglich der Vermittlungsstellen V1 und V2 beschrieben worden sind.

Im Anschluß an die zuvor betrachtete erste virtuelle Verbindung bzw. an die zu dieser gehörenden ersten logischen Teilverbindung in dem Vermittlungsnetz N1 wird das genannte erste Informationssignal INF1 im Zuge einer zu einer zweiten virtuellen Verbindung gehörenden ersten logischen Teilverbindung über die Netzverbindungseinrichtung TL12 zu dem zweiten Vermittlungsnetz N2, im vorliegenden Fall zusammen mit einer den Übertragungsweg über die betreffende Netzverbindungseinrichtung TL12 bzw. die betreffende zweite virtuelle Verbindung festlegenden und damit dieser zugeordneten Kennzeichnungsinformation RT und der die Signalaufnahme-/-abgabeeinrichtung TB bezeichnenden Wahlinformation übertragen, und zwar vorzugsweise nur des diese Signalaufnahme-/-abgabeeinrichtung TB bezeichnenden Wahlinformationsteiles B. Dies ist durch den in Fig. 2 dargestellten Transportblock TB2 verdeutlicht. Die erwähnte Kennzeichnungsinformation RT, die gewissermaßen die Funktion einer Adressenangabe erfüllt, wird sowohl in dem zuvor betrachteten Speicher M2, und zwar dort beispielsweise in dem Speicherabschnitt M2AN, als auch in dem Speicherabschnitt M3AB des der Vermittlungsstelle V3 des Vermittlungsnetzes N2 zugehörigen Speichers M3 gespeichert. Damit ist auf beiden Seiten der Netzverbindungseinrichtung TL12 in den durch diese verbundenen Vermittlungsnetzen N1 und N2 eine Kennzeichnungsinformation bezüglich des ersten übertragenen Informationssignals INF1 festgehalten. Dabei ist ersichtlich, dass bei dem betrachteten Übergang vom Vermittlungsnetz N1 zum Vermittlungsnetz N2 jegliche das Vermittlungsnetz N1 betreffende Angaben wegfallen.

In dem Vermittlungsnetz N2 wird nach der Übertragung der die dort angeschlossene Signalaufnahme-/-abgabeeinrichtung TB bezeichnenden Wahlinformation, und zwar vorzugsweise nur des diese Signalaufnahme-/-abgabeeinrichtung TB bezeichnenden Wahlinformationsteiles B eine zu einer dritten virtuellen Verbindung gehörende erste logische Teilverbindung aufgebaut, im Zuge der der Transportblock TB3 zwischen den Vermittlungsstellen V3 und V4 übertragen wird. Dieser Transportblock TB3 enthält neben dem ersten Informations-signal INF1 und der die Signalaufnahme-/-abgabeeinrichtung TB bezeichnenden Wahlinformation B eine Angabe über die Herkunft des betreffenden Transportblockes, nämlich hier V3 und eine in dem Vermittlungsnetz N2, genauer gesagt in dessen Vermittlungsstelle V3 für die Übertragung des ersten Informationssignals INF1 benutzte bzw. zugeordnete gesonderte Referenzangabe R3. Diese Referenzangabe R3 wird auch in dem Speicherabschnitt M3AB des Speichers M3 festgehalten, und zwar zusammen mit der zuvor erwähnten Kennzeichnungs-information RT. Die Angabe V3 kann gegebenenfalls durch eine die Übergangseinrichtung GW2 bezeichnende Angabe ergänzt oder ersetzt sein.

Aufgrund des so im Zuge der zu der dritten virtuellen Verbindung gehörenden ersten logischen Teilverbindung im Signalisierungssystem des Vermittlungsnetzes N2 der Vermittlungsstelle V4 übertragenen Transportblocks TB3 werden im Speicherabschnitt M4AB des dieser Vermittlungsstelle V4 zugehörigen Speichers M4 die Angaben V3 und R3 abgespeichert. Das erste Informationssignal INF1 wird entweder der Signalaufnahme-/-abgabeeinrichtung TB zugeführt oder, falls diese belegt ist, zur anderen Verarbeitung herangezogen, beispielsweise zur Rückübertragung eines Quittungs- bzw. zweiten Informationssignals INF2 zur Signalabgabe-/-aufnahmeeinrichtung TA hin. Der im Transportblock TB3 übertragene Wahlinformationsanteil B wird nicht weiter gebraucht, da das durch diesen Wahlinformationsteil B bezeichnete Ziel erreicht ist.

Sind übrigens zwischen den Vermittlungsstellen V3 und V4 des Vermittlungsnetzes N2 weitere Vermittlungsstellen vorhanden und in die Übertragung der Informationen bzw. Signale INF1 und B sowie der Referenzangabe R3 einbezogen, so laufen zwischen und in diesen weiteren Vermittlungsstellen entsprechende Vorgänge ab, wie sie vorstehend bezüglich der Vermittlungsstellen V3 und V4 beschrieben worden sind.

Das erwähnte zweite Informationssignal INF2, das von der Signalaufnahme-/-abgabeeinrichtung TB oder von der Vermittlungsstelle V4 abgebbar ist, an der diese Einrichtung TB angeschlossen ist, wird im Zuge einer die dritte virtuelle Verbindung vervollständigenden zweiten logischen Teilverbindung in dem Vermittlungsnetz N2 von der Vermittlungsstelle V4 zur Vermittlungsstelle V3 hin übertragen. Dies ist in Fig. 2 durch den Transportblock TB3' veranschaulicht. Mit diesem Transportblock TB3' wird das betreffende zweite Informationssignal INF2 zusammen mit der im Speicherabschnitt M4AB des Speichers M4 enthaltenen Angaben V3 (und/oder GW2) und R3 als Adressenangabe zur Vermittlungsstelle V3 innerhalb des Vermittlungsnetzes N2 abgegeben, die im Zuge der Übertragung des ersten Informationssignals IN1 involviert war. Ferner werden mit dem Transportblock TB4 Angaben V4 und R4 übertragen. Mit V4 ist die Herkunft des betreffenden Transportblockes TB3' von der Vermittlungsstelle V4 bezeichnet, und mit R4 ist eine der Übertragung des zweiten Informationssignals INF2 in der Vermittlungsstelle V4 des Vermittlungsnetzes N2 zugeordnete Referenzangabe bezeichnet.

Im Zusammenhang mit der Übertragung des vorstehend betrachteten Transportblocks TB3' werden in dem Speicherabschnitt M4AN des der Vermittlungsstelle V4 zugehörigen Speichers M4 die Angaben B (das ist die Adresse der Signalaufnahme-/-abgabeeinrichtung TB) und die Referenzangabe R4 gespeichert.

Anhand des so von der Vermittlungsstelle V4 zur Vermittlungsstelle V3 übertragenen Transportblocks TB4 werden in dem Speicherabschnitt M3AN des der Vermittlungsstelle V3 zugehörigen Speichers M3 die Angaben V4 über die Herkunft des betreffenden Transportblocks TB4 und die Referenzangaben R4 gespeichert.

Es sei hier angemerkt, dass den vorstehend erläuterten Vorgängen entsprechende Vorgänge in weiteren Vermittlungsstellen ablaufen, wenn diese zwischen den Vermittlungsstellen V4 und V3 des Vermittlungsnetzes N2 vorhanden und in die Übertragung des zweiten Informationssignals INF2 involviert sind.

Von der Vermittlungsstelle V3 und damit von dem Vermittlungsnetz N2 aus wird daraufhin im Rahmen einer die zweite virtuelle Verbindung vervollständigenden zweiten logischen Teilverbindung über die Übergungseinrichtung GW2 und die Netzverbindungseinrichtung TL12 der Transportblock TB2' übertragen, der lediglich das zweite Informationssignal INF2 und die oben bereits erwähnte Kennzeichnungsinformation RT enthält, die nunmehr auch als Referenzangabe bezüglich der Übertragung des zweiten Informationssignals INF2 über die Netzverbindungseinrichtung TL12 dient. Auch in diesem Falle entfallen beim Übergang vom Vermittlungsnetz N2 zum Vermittlungsnetz N1 jegliche das Vermittlungsnetz N2 betreffende Angaben.

Auf die Aufnahme des zweiten Informationssignals INF2 in dem Vermittlungsnetz N1, und zwar genauer gesagt über die Übergangseinrichtung GW1 in deren Vermittlungsstelle V2, wird in dem Speicherabschnitt M2AN des dieser Vermittlungsstelle V2 zugehörigen Speichers M2 nunmehr lediglich noch eine Referenzangabe R2 gespeichert, die eine Referenzangabe in der Vermittlungsstelle V2 für die Übertragung des zweiten Informationssignals INF2 in dem Vermittlungsnetz N1 darstellt. An Hand der im Speicherabschnitt M2AB des erwähnten Speichers M2 enthaltenen Angabe V1 ist die Zielvermittlungsstelle V1 bekannt, zu der das zweite Informationssignal INF2 hin zu übertragen ist, und zwar zusammen mit der zuvor benutzten Referenzangabe R1. Demgemäß enthält der im Zuge einer die erste virtuelle Verbindung vervollständigenden zweiten logischen Teilverbindung im Signalisierungssystem des Vermittlungsnetzes N1 übertragene Transportblock TB1' neben dem zweiten Informationssignal INF2 die Angaben V1, R1 sowie die neue Referenzangabe R2 und die Angabe V2. Diese Angabe V2 kann gegebenenfalls durch eine die Übergangseinrichtung GW1 bezeichnende Angabe ergänzt oder ersetzt sein.

Auch in diesem Zusammenhang sei angemerkt, dass den vorstehend erläuterten Vorgängen entsprechende Vorgänge in weiteren Vermittlungsstellen ablaufen, wenn diese zwischen den Vermittlungsstellen V2 und V1 des Vermittlungsnetzes N1 vorhanden und in die Übertragung des zweiten Informations-signals INF2 involviert sind.

Während im Zuge der Übertragung des ersten Informationssignals INF1 von der Signalabgabe-/-aufnahmeeinrichtung bzw. Teilnehmerstelle TA zur Signalaufnahme-/-abgabeeinrichtung bzw. Teilnehmerstelle B hin in den betroffenen Vermittlungsnetzen N1 und N2 bzw. in den den in diese Übertragung involvierten Vermittlungsstellen dieser Vermittlungsnetze zugehörigen Speichern lediglich Adressenangaben über die Herkunft des jeweils vermittelten bzw. übertragenen ersten Informationssignals INF1 zusammen mit netzindividuellen Referenzangaben (R1, R3) festgehalten bzw. gespeichert worden sind, werden im Zuge der Übertragung des zweiten Informa-tionssignals INF2 von der Signalaufnahme-/-abgabeeinrichtung bzw. Teilnehmerstelle TB zur Signalabgabe-/-aufnahmeeinrich-tung bzw. Teilnehmerstelle TA hin diese Angaben für eine rückwärtige Übertragung genutzt, im Zuge der dann in entsprechender Weise in den betreffenden Vermittlungsnetzen N2 bzw. N1 und damit in den den involvierten Vermittlungs-stellen dieser Vermittlungsnetze zugehörigen Speichern Adressenangaben darüber, woher das betreffende zweite Informationssignal jeweils vermittelt bzw. übertragen worden ist, zusammen mit weiteren netzindividuellen Referenzangaben (R4, R2) gespeichert werden. Damit eignet sich diese Vorgehensweise auf einfache Weise dazu, zwischen verschiedenen Vermittlungsnetzen zugehörigen Teilnehmerstellen z.B. den eingangs betrachteten Dienst zu realisieren, der eingangs erwähnt worden ist und der im Englischen mit "Completion of Calls to Busy Subscriber - CCBS" bezeichnet ist.

Im vorstehenden ist erläutert worden, dass die Adressenangaben und die Referenzangaben für die jeweilige nutzkanalunabhängige Übertragung der Informationssignale INF1 und INF2 im Zuge von zu virtuellen Verbindungen gehörenden logischen Teilverbindungen innerhalb der verschiedenen Signalisierungssysteme der involvierten Vermittlungsnetze und der diese verbindenden Netzverbindungseinrichtung in Speichern M1 bis M4 festgehalten werden, die den jeweils betroffenen Vermittlungsstellen der Vermittlungsnetze N1 und N2 zugehörig sind.

An Hand dieser so festgehaltenen Angaben können anschließend weitere Informationssignale zwischen den betreffenden Einrichtungen bzw. Teilnehmerstellen im Zuge der festgelegten bzw. festliegenden virtuellen Verbindungen innerhalb der Signalisierungssysteme der betreffenden Vermittlungsnetze bzw. Netzverbindungseinrichtung übertragen werden, ohne dass noch eine weitere Wegesuche erforderlich ist. Außerdem können auf der Grundlage der so übertragenen Informationssignale gegebenenfalls auch noch ergänzend Nutzkanalverbindungen hergestellt werden, wie z.B. im Anschluß an den zuvor erwähnten Dienst CCBS. Im übrigen können die im Zuge der erläuterten virtuellen Verbindungen übertragenen und in den den einzelnen Vermittlungsstellen der Vermittlungsnetze N1, N2 zugehörigen Speichern gespeicherten Angaben wieder leicht gelöscht werden, und zwar entweder automatisch nach Ablauf einer festgelegten Zeitspanne oder durch Auslösen der betreffenden virtuellen Verbindungen, beispielsweise von einer der Einrichtungen bzw. Teilnehmer-stellen TA, TB aus, die in die Übertragung der Informations-signale INF1 und INF2 einbezogen waren.

Es ist nun auch möglich, anstelle der erläuterten Abspeicherung der genannten Adressenangaben und der Referenzangaben und damit der die Vermittlungswege innerhalb der Vermittlungsnetze N1, N2 festlegenden Angaben diese Angaben zusammen mit dem jeweiligen Informationssignal zur Informationsaufnahme-/-abgabeeinrichtung bzw. zur Signalabgabe-/-aufnahmeeinrichtung oder zwischen den diese Einrichtungen enthaltenden Vermittlungsstellen V4 bzw. V1 zu übertragen und dort festzuhalten. In diesem Fall brauchen die betreffenden Angaben nicht in den erwähnten Speichern M1 bis M4 gespeichert zu werden.

Abschließend sei noch angemerkt, dass die vorliegende Erfindung sich zur nutzkanalunabhängigen Übertragung von unterschiedlichsten Informationssignalen eignet, die durch verschiedenste Steuersignale, Befehlssignale, Abfragesignale und/oder Antwortsignale gebildet sein können, wie sie beispielsweise für die eingangs erwähnten Telematikdienste oder Statusabfragen in Frage kommen. Im übrigen ist noch darauf hinzuweisen, dass durch Anwendung des Verfahrens gemäß der Erfindung auf besonders einfache Weise zwischen Endeinrichtungen transparente Steuerkanäle aufgebaut werden können.

## Patentansprüche

1. Verfahren zur nutzkanalunabhängigen Übertragung von Informationssignalen, insbesondere von Steuersignalen, Befehlssignalen, Abfragesignalen und/oder Antwortsignalen, zwischen einer an einem Vermittlungsnetz (N1) mit zumindest einer Vermittlungsstelle (V1, V2) angeschlossenen Signalabgabe-/-aufnahmeeinrichtung (TA) und einer an einem weiteren Vermittlungsnetz (N2) mit zumindest einer Vermittlungsstelle (V3, V4) angeschlossenen Signalaufnahme-/-abgabeeinrichtung (TB) in einem wenigstens diese beiden Vermittlungsnetze (N1, N2) umfassenden Vermittlungsnetzsystem, in dessen Vermittlungsnetzen (N1, N2) jeweils neben Nutzkanälen für die Übertragung von Sprach-, Bild- und/oder Datensignalen gesonderte Signalisierungskanäle verfügbar sind, über die Signalisierungsinformationen im Zuge von Nutzkanalverbindungen oder gegebenenfalls auch ohne Bezug zu Nutzkanälen übertragbar sind,
wobei zumindest die beiden genannten Vermittlungsnetze (N1, N2) des Vermittlungsnetzsystems mittels Übergangseinrichtungen (GW1, GW2) über eine Netzverbindungseinrichtung (TL12) miteinander gekoppelt sind, die ebenfalls über Nutzkanäle und über diesen zugeordnete Signalisierungskanäle verfügt,
und wobei in den Vermittlungsnetzen (N1, N2) und in der diese miteinander verbindenden Netzverbindungseinrichtung (TL12) unterschiedliche Signalisierungssysteme betrieben werden,
**dadurch gekennzeichnet,**
**dass** die Informationssignale in den beiden Vermittlungsnetzen (N1, N2) und über die Netzverbindungseinrichtung (TL12) jeweils im Zuge von gesonderten virtuellen Verbindungen innerhalb des jeweiligen Signalisierungskanalsystems übertragen werden
und **dass** diese virtuellen Verbindungen innerhalb der betreffenden Vermittlungsnetze (N1, N2) bzw. über die Netzverbindungseinrichtung (TL12) durch die in den betreffenden Vermittlungsnetzen (N1, N2) dabei jeweils zu benutzenden bzw. benutzten Vermittlungsstellen (V1, V2; V3, V4) bzw. durch die Übergangseinrichtungen (GW1, GW2) zu der Netzverbindungseinrichtung (TL12) hin bezeichnende Angaben festgelegt werden.

2. Verfahren nach Anspruch 1, **dadurch gekennzeichnet,**
a) **dass** in dem einen Vermittlungsnetz (N1), an dem die Signalabgabe-/-aufnahmeeinrichtung (TA) angeschlossen ist, in dem diesem Vermittlungsnetz (N1) zugehörigen Signalisierungssystem im Zuge einer zu einer ersten virtuellen Verbindung gehörenden ersten logischen Teilverbindung von der Signalabgabe-/-aufnahmeeinrichtung (TA) zu der Netzverbindungseinrichtung (TL12) hin ein erstes Informationssignal (INF1) zusammen mit der das betreffende weitere Vermittlungsnetz (N2) und die an diesem angeschlossene Signalaufnahme-/-abgabeeinrichtung (TB) bezeichnenden Wahlinformation unter Festhalten von den dabei benutzten Vermittlungs- bzw. Übertragungsweg bezeichnenden Adressenangaben übertragen wird,
b) **dass** im Zuge einer zu einer zweiten virtuellen Verbindung gehörenden ersten logischen Teilverbindung über die Netzverbindungseinrichtung (TL12) zu dem genannten weiteren Vermittlungsnetz (N2) hin das betreffende erste Informationssignal (INF1) zusammen mit einer den Übertragungsweg über die betreffende Netzverbindungseinrichtung (TL12) bzw. die betreffende zweite virtuelle Verbindung festlegenden Kennzeichnungsinformation (RT) übertragen wird,
c) und **dass** in dem genannten weiteren Vermittlungsnetz (N2), an dem die Signalaufnahme-/-abgabeeinrichtung (TB) angeschlossen ist, nach Aufnahme der diese bezeichnenden Wahlinformation über die genannte Netzverbindungseinrichtung (TL12) im Zuge einer zu einer dritten virtuellen Verbindung gehörenden ersten logischen Teilverbindung von der genannten Netzverbindungseinrichtung (TL12) zu der Signalaufnahme-/-abgabeeinrichtung (TB) hin das betref-fende erste Informationssignal (INF1) zusammen mit der die Signalaufnahme-/-abgabeeinrichtung (TB) bezeichnenden Wahlinformation unter Festhalten von den dabei benutzten Vermittlungs- bzw. Übertragungsweg bezeichneten Adressenangaben übertragen wird.

3. Verfahren nach Anspruch 2, **dadurch gekennzeichnet,**
d) **dass** im Zuge einer zu der dritten virtuellen Verbindung gehörenden und diese vervollständigenden zweiten logischen Teilverbindung von der betreffenden Signalaufnahme-/-abgabeeinrichtung (TB) zu der Netzverbindungseinrichtung (TL12) hin ein zweites Informationssignal an Hand der den Übertragungsweg in dem betreffenden weiteren Vermittlungsnetz (N2) festlegenden Adressenangaben übertragen wird,
e) dass im Zuge einer zu der zweiten virtuellen Verbindung gehörenden und diese vervollständigenden zweiten logischen Teilverbindung über die Netzverbindungseinrichtung (TL12) das zweite Informationssignal zusammen mit der genannten Kennzeichnungsinformation übertragen wird
f) und dass im Zuge einer zu der ersten virtuellen Verbindung gehörenden und diese vervollständigenden zweiten logischen Teilverbindung in dem genannten einen Vermitt-lungsnetz (N1) das zweite Informationssignal zu der Signalabgabe-/-aufnahmeeinrichtung hin an Hand der den Übertragungsweg in dem betreffenden einen Vermitt-lungsnetz (N1) festlegenden Adressenangaben übertragen wird.

4. Verfahren nach Anspruch 2 und 3, **dadurch gekennzeichnet, dass** zur automatischen Verbindungsherstellung zwischen einer an dem genannten einen Vermittlungsnetz (N1) angeschlossenen, die Signalabgabe-/-aufnahmeeinrichtung (TA) darstellenden rufenden Teilnehmerstelle und einer an dem genannten weiteren Vermittlungsnetz (N2) angeschlossenen, die Signalaufnahme-/-abgabeeinrichtung (TB) darstellenden anzurufenden Teilnehmerstelle für den Fall, dass die betreffende anzurufende Teilnehmerstelle sich im Besetztzustand befindet, nach zunächst fehlgeschlagenem Verbindungsaufbau zwischen den betreffenden Teilnehmerstellen unter Heranziehung und anschließender Freigabe von Nutzkanälen als erstes und zweites Informationssignal (INF1,INF2) Steuersignale übertragen werden, durch welche ein Verbindungsaufbau zwischen der an dem genannten einen Vermittlungsnetz (N1) angeschlossenen, die Signalabgabe-/-aufnahmeeinrichtung (TA) darstellenden rufenden Teilnehmerstelle und der an dem genannten weiteren Vermittlungsnetz (N2) angeschlossenen, die Signalaufnahme-/-abgabeeinrichtung (TB) darstellenden anzurufenden Teilnehmerstelle ermöglicht wird, nachdem die zunächst im Besetztzustand befindliche anzurufende Teil-nehmerstelle der betreffenden Teilnehmerstellen in den Freizustand gewechselt hat.

5. Verfahren nach einem der Ansprüche 2 bis 4, **dadurch gekennzeichnet, dass** über die Netzverbindungseinrichtung (TL12) nur derjenige Teil der Wahlinformation, der zur Bezeichnung der Signalaufnahme-/-abgabeeinrichtung (TB) in dem weiteren Vermittlungsnetz (N2) erforderlich ist, übertragen wird.

6. Verfahren nach einem der Ansprüche 1 bis 5, **dadurch gekennzeichnet, dass** als die die virtuellen Verbindungen innerhalb der Vermittlungsnetze (N1, N2) jeweils festlegenden Angaben bzw. Adressenangaben in den das jeweils übertragene Informationssignal aufnehmenden Vermittlungsstellen (V1, V2; V3, V4) jeweils eine Angabe über die das jeweilige Informationssignal abgebende Einrichtung (TA; TB) bzw. Vermittlungsstelle (V1, V2; V3, V4) innerhalb des jeweiligen Vermittlungsnetzes (N1; N2) gespeichert wird, dass zusätzlich in diesen Vermittlungsstellen jeweils eine im jeweiligen Vermittlungsnetz (N1, N2) verbindungsindividuell festgelegte bzw. benutzte Referenzangabe gespeichert wird und dass allein die betreffenden Angaben bzw. Adressen- und Referenzangaben im Zuge der Übertragung weiterer Informationssignale durch die genannten virtuellen Verbindungen genutzt werden.

7. Verfahren nach Anspruch 6, **dadurch gekennzeichnet, dass** die im Zuge der jeweiligen virtuellen Verbindung in dem einen Vermittlungsnetz und/oder in dem weiteren Vermittlungsnetz benutzten, den jeweiligen Vermittlungs- bzw. Übertragungsweg festlegenden Angaben bzw. Adressenangaben sowie die verbindungsindividuell im jeweiligen Vermittlungsnetz (N1, N2) festgelegten bzw. benutzten Referenzangaben R1, R2; R3, R4) anstatt in den jeweiligen Vermittlungsstellen (V1, V2; V3, V4) der betreffenden Vermittlungsnetze (N1, N2) abgespeichert zu werden zusammen mit dem jeweiligen Informationssignal zwischen der Informationsabgabe-/-aufnahmeeinrichtung (TA) und der Signalaufnahme-/-abgabeeinrichtung (TB) oder zwischen den diese Einrichtungen (TA, TB) enthaltenden Vermittlungs-stellen (V1, V4) übertragen und dort festgehalten werden.

## Claims

1. Method for the user-channel-independent transmission of information signals, particularly of control signals, command signals, inquiry signals and/or response signals, between a signal emission/admission device (TA) connected at a switching network (N1) with at least one exchange (V1, V2), and a signal admission/emission device (TB) connected at a further switching network (N2) with at least one exchange (V3, V4) in a switching network system comprising at least these two switching networks (N1, N2), in the switching networks (N1, N2) of which in each case, apart from user channels for the transmission of voice, image and/or data signals, separate signalling channels are available via which signalling information can be transmitted in user-channel connections or possibly also without reference to user channels, wherein at least the two said switching networks (N1, N2) of the switching network system are coupled to one another by means of gateways (GW1, GW2) via a network interconnection device (TL12) which also has user channels and signalling channels associated with these, and wherein different signalling systems are operated in the switching networks (N1, N2) and in the network interconnection device (TL12) connecting these with one another, **characterized in that** the information signals are in each case transmitted in the two switching networks (N1, N2) and via the network interconnection device (TL12) in separate virtual connections within the respective signalling channel system, and that these virtual connections are established within the relevant switching networks (N1, N2) or, respectively, via the network interconnection device (TL12) by the exchanges (V1, V2; V3, V4) to be used or used in each case in the relevant switching networks (N1, N2) or by information designating the gateways (GW1, GW2) towards the network interconnection device (TL12).

2. Method according to Claim 1, **characterized in that**
a) in the one switching network (N1) at which the signal emission/admission (TA) device is connected in the signalling system belonging to this switching network (N1), a first information signal (INF1) is transmitted, as part of a first logical part-connection belonging to a first virtual connection from the signal emission/admission device (TA) to the network interconnection device (TL12), together with the dialling information designating the relevant further switching network (N2) and the signal admission/emission device (TB) connected to the latter, retaining the address information designating the switching or transmission path used during this process,
b) in a first logical part-connection belonging to a second virtual connection, the relevant first information signal (INF1) is transmitted, together with identification information (RT) specifying the transmission path via the relevant network interconnection device (TL12) or, respectively, the relevant second virtual connection, via the network interconnection device (TL12) to the said further switching network (N2),
c) and in the said further switching network (N2), at which the signal admission/emission device (TB) is connected, after admission of the dialling information designating it via the said network interconnection device (TL12), the relevant first information signal (INF1) is transmitted, together with the dialling information designating the signal admission/emission device (TB), retaining the address information designating the switching or transmission path used during this process, from the said network interconnection device (TL12) to the signal admission/emission device (TB) as part of a first logical part-connection belonging to a third virtual connection.

3. Method according to Claim 2, **characterized in that**
d) that, as part of a second logical part-connection belonging to the third virtual connection and completing it, from the relevant signal admission/emission device (TB) to the network interconnection device (TL12), a second information signal is transmitted by means of the address information specifying the transmission path in the relevant further switching network (N2),
e) that in a second logical part-connection, belonging to the second virtual connection and completing it, the second information signal is transmitted together with the said identification information via the network interconnection device (TL12),
f) and that in a second logical part-connection, belonging to the first virtual connection and completing it, the said one switching network (N1), the second information signal is transmitted towards the signal emission/admission device by means of the address information specifying the transmission path in the relevant one switching network (N1).

4. Method according to Claim 2 and 3, **characterized in that**, for automatically establishing a connection between a calling subscriber station connected at the said one switching network (N1) and representing the signal emission/admission device (TA) and a subscriber station to be called, connected to the said further switching network (N2) and representing the signal admission/emission device (TB), for the case that the relevant subscriber station to be called is in the busy state, after an initially unsuccessful connection setup between the relevant subscriber stations, utilizing and subsequently releasing user channels, control signals are transmitted as first and second information signal (INF1, INF2) by means of which a connection setup between the calling subscriber station, connected to the said one switching network (N1) and representing the signal emission/admission device (TA) and the subscriber station to be called, connected to the said further switching network (N2) and representing the signal admission/emission device (TB) is made possible after the subscriber station to be called, of the relevant subscriber stations, which is initially in the busy state, has changed into the idle state.

5. Method according to one of Claims 2 to 4, **characterized in that** only the part of the dialling information which is required for designating the signal admission/emission device (TB) in the further switching network (N2) is transmitted via the network interconnection device (TL12).

6. Method according to one of Claims 1 to 5, **characterized in that** as the information or address information in each case specifying the virtual connections within the switching networks (N1, N2), in each case an information item about the device (TA; TB) or exchange (V1, V2; V3, V4), emitting the respective information signal, is stored within the respective switching network (N1; N2) in the exchanges (V1, V2; V3, V4) admitting the information signal transmitted in each case, that additionally a reference information item connection-individually established or used in the respective switching network (N1, N2) is stored in these exchanges and that only the relevant information or address and reference information is used in the course of the transmission of other information signals by the said virtual connections.

7. Method according to Claim 6, **characterized in that** the information or address information used in the one switching network and/or in the further switching network in the course of the respective virtual connection and establishing the respective switching or transmission path and the reference information (R1, R2; R3, R4) established or used connection-individually in the respective switching network (N1, N2), instead of being stored in the respective exchanges (V1, V2; V3, V4) of the relevant switching networks (N1, N2) are transmitted, together with the respective information signal between the information emission/admission device (TA) and the signal admission/emission device (TB) or between the exchanges (V1, V4) containing these devices (TA, TB) and are stored there.

## Revendications

1. Procédé pour la transmission, indépendante de canaux utiles, de signaux d'informations, notamment de signaux de commande, de signaux d'instructions, de signaux de demande et/ou de signaux de réponse, entre un dispositif d'émission / réception de signaux (TA) raccordé à un réseau commuté (N1) avec au moins un centre de commutation (V1, V2) et un dispositif de réception / émission de signaux (TB) raccordé à un autre réseau commuté (N2) avec au moins un centre de commutation (V3, V4) dans un système de réseaux commutés qui comprend au moins ces deux réseaux commutés (N1, N2) et dans les réseaux commutés (N1, N2) duquel des canaux de signalisation particuliers sont disponibles en plus des canaux utiles pour la transmission de signaux de paroles, d'images et/ou de données, canaux de signalisation par l'intermédiaire desquels des informations de signalisation peuvent être transmises au cours de liaisons par canaux utiles ou le cas échéant aussi sans référence à des canaux utiles,
au moins les deux réseaux commutés mentionnés (N1, N2) du système de réseaux commutés étant couplés au moyen de passerelles (GW1, GW2) par l'intermédiaire d'un dispositif de liaison de réseau (TL12) qui dispose également de canaux utiles et de canaux de signalisation associés à ceux-ci
et différents systèmes de signalisation étant exploités dans les réseaux commutés (N1, N2) et dans le dispositif de liaison de réseau (TL12) reliant ceux-ci entre eux,
**caractérisé par le fait que**
les signaux d'informations sont transmis dans les deux réseaux commutés (N1, N2) et par l'intermédiaire du dispositif de liaison de réseau (TL12) à chaque fois au cours de liaisons virtuelles particulières à l'intérieur du système de canal de signalisation respectif
et ces liaisons virtuelles à l'intérieur des réseaux commutés concernés (N1, N2) ou par l'intermédiaire du dispositif de liaison de réseau (TL12) sont spécifiées par des indications désignant les centres de commutation (V1, V2 ; V3, V4) respectivement à utiliser ou utilisés dans les réseaux commutés concernés (N1, N2) ou les passerelles (GW1, GW2) vers le dispositif de liaison de réseau (TL12).

2. Procédé selon la revendication 1, **caractérisé par le fait que**
a) dans le premier réseau commuté (N1) auquel est raccordé le dispositif d'émission / réception de signaux (TA), dans le système de signalisation associé à ce réseau commuté (N1), au cours d'une première liaison partielle logique appartenant à une première liaison virtuelle et menant du dispositif d'émission / réception de signaux (TA) au dispositif de liaison de réseau (TL12), un premier signal d'information (INF1) est transmis conjointement avec l'information de numérotation désignant l'autre réseau commuté concerné (N2) et le dispositif de réception / émission de signaux (TB) raccordé à celui-ci en gardant des indications d'adresse désignant le moyen de commutation ou de transmission respectivement utilisé,
b) au cours d'une première liaison logique partielle appartenant à une deuxième liaison virtuelle et menant par l'intermédiaire du dispositif de liaison de réseau (TL12) à l'autre réseau commuté mentionné (N2), le premier signal d'information concerné (INF1) est transmis conjointement avec une information de caractérisation (RT) spécifiant la voie de transmission passant par l'intermédiaire du dispositif de liaison de réseau concerné (TL12) ou la deuxième liaison virtuelle concernée,
c) et, dans l'autre réseau commuté mentionné (N2) auquel est raccordé le dispositif de réception / émission de signaux (TB), après la réception de l'information désignant celui-ci, par l'intermédiaire du dispositif de liaison de réseau mentionné (TL12), au cours d'une première liaison partielle logique appartenant à une troisième liaison virtuelle et menant du dispositif de liaison de réseau mentionné (TL12) au dispositif de réception / émission de signaux (TB), le premier signal d'information concerné (INF1) est transmis conjointement avec l'information de numérotation désignant le dispositif de réception / émission de signaux (TB) en gardant des indications d'adresse désignant le moyen de commutation ou de transmission alors utilisé.

3. Procédé selon la revendication 2, **caractérisé par le fait que**
d) au cours d'une deuxième liaison partielle logique appartenant à la troisième liaison virtuelle, complétant celle-ci et menant du dispositif de réception / émission de signaux (TB) au dispositif de liaison de réseau (TL12), un deuxième signal d'information est transmis à l'aide des indications d'adresse spécifiant le moyen de transmission dans l'autre réseau commuté concerné (N2),
e) au cours d'une deuxième liaison logique partielle appartenant à la deuxième liaison virtuelle et complétant celle-ci, par l'intermédiaire du dispositif de liaison de réseau (TL12), le deuxième signal d'information est transmis conjointement avec l'information de caractérisation mentionnée
f) et, au cours d'une deuxième liaison logique partielle appartenant à la première liaison virtuelle et complétant celle-ci, dans le premier réseau commuté mentionné (N1), le deuxième signal d'information est transmis au dispositif d'émission / réception de signaux à l'aide d'indications d'adresse spécifiant le moyen de transmission dans le premier réseau commuté concerné (N1).

4. Procédé selon la revendication 2 ou 3, **caractérisé par le fait que**, pour l'établissement automatique de liaison entre un poste d'abonné appelant raccordé au premier réseau commuté mentionné (N1) et représentant le dispositif d'émission / réception de signaux (TA) et un poste d'abonné à appeler raccordé à l'autre réseau commuté mentionné (N2) et représentant le dispositif de réception / émission de signaux (TB), si le poste d'abonné à appeler concerné se trouve dans l'état occupé, après un établissement de liaison échouant d'abord entre les postes d'abonnés concernés et en exploitant puis libérant des canaux utiles, des signaux de commande sont transmis comme premier et deuxième signaux d'information (INF1, INF2), signaux de commande par lesquels un établissement de liaison est permis entre le poste d'abonné appelant raccordé au premier réseau commuté mentionné (N1) et représentant le dispositif d'émission / réception de signaux (TA) et le poste d'abonné à appeler raccordé à l'autre réseau commuté mentionné (N2) et représentant le dispositif de réception / émission de signaux (TB) après que le poste d'abonné à appeler qui se trouvait d'abord dans l'état occupé est passé dans l'état libre.

5. Procédé selon l'une des revendications 2 à 4, **caractérisé par le fait que**, par l'intermédiaire du dispositif de liaison de réseau (TL12), seule est transmise la partie de l'information de numérotation qui est nécessaire à la désignation du dispositif de réception / émission de signaux (TB) dans l'autre réseau commuté (N2).

6. Procédé selon l'une des revendications 1 à 5, **caractérisé par le fait que**, comme indications ou indications d'adresse spécifiant les liaisons virtuelles à l'intérieur des réseaux commutés (N1, N2), une indication sur le dispositif (TA ; TB) ou centre de commutation (V1, V2 ; V3, V4) émettant le signal d'information respectif à l'intérieur du réseau commuté respectif (N1 ; N2) est mémorisée à chaque fois dans les centres de commutation respectifs (V1, V2 ; V3, V4) recevant le signal d'information respectivement transmis, que, en plus, une indication de référence spécifiée ou utilisée de manière particulière à la liaison dans le réseau commuté respectif (N1, N2) est mémorisée à chaque fois dans ces centres de commutation et que seules les indications ou indications d'adresse et de référence concernées sont utilisées au cours de la transmission d'autres signaux d'information par les liaisons virtuelles mentionnées.

7. Procédé selon la revendication 6, **caractérisé par le fait que** les indications ou indications d'adresse utilisées au cours de la liaison virtuelle respective dans le premier réseau commuté et/ou dans l'autre réseau commuté et spécifiant le moyen de commutation ou de transmission respectif ainsi que les indications de référence (R1, R2 ; R3, R4) spécifiées ou utilisées de manière particulière à la liaison dans le réseau commuté respectif (N1, N2), au lieu d'être mémorisées dans les centres de commutation respectifs (V1, V2 ; V3, V4) des réseaux de commutation concernés (N1, N2), sont transmises conjointement avec le signal d'information respectif entre le dispositif d'émission / réception de signaux (TA) et le dispositif de réception / émission de signaux (TB) ou entre les centres de commutation (V1, V4) contenant ces dispositifs (TA, TB) pour y être conservées.
